(19) **Europäisches Patentamt / European Patent Office / Office européen des brevets**

(11) **EP 4 464 997 B1**

(12) **FASCICULE DE BREVET EUROPÉEN**

(45) Date de publication et mention de la délivrance du brevet:
**25.06.2025 Bulletin 2025/26**

(21) Numéro de dépôt: **24159969.5**

(22) Date de dépôt: **27.02.2024**

(51) Classification Internationale des Brevets (IPC):
**G01H 1/00** (2006.01)    **G01M 13/028** (2019.01)
**G01M 13/045** (2019.01)    **G01M 15/12** (2006.01)
**B64D 45/00** (2006.01)

(52) Classification Coopérative des Brevets (CPC):
**G01M 13/028; B64D 45/00; G01H 1/003; G01M 13/045; G01M 15/12; B64D 2045/0085**

(54) **PROCÉDÉ ET DISPOSITIF DE SURVEILLANCE DE SANTÉ D'UN SYSTÈME MÉCANIQUE D'UN VÉHICULE EN UTILISANT DES SEUILS VARIABLES SELON DES PARAMÈTRES DE FONCTIONNEMENT DU SYSTEME**

VERFAHREN UND VORRICHTUNG ZUR ÜBERWACHUNG DES STATUS EINES MECHANISCHEN SYSTEMS EINES FAHRZEUGS UNTER VERWENDUNG VON SCHWELLEN, DIE ABHÄNGIG VON DEN BETRIEBSPARAMETERN DES SYSTEMS VARIIEREN

METHOD AND DEVICE FOR MONITORING THE HEALTH OF A MECHANICAL SYSTEM OF A VEHICLE BY USING THRESHOLDS THAT VARY DEPENDING ON OPERATING PARAMETERS OF THE SYSTEM

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **15.05.2023 FR 2304803**

(43) Date de publication de la demande:
**20.11.2024 Bulletin 2024/47**

(73) Titulaire: **Airbus Helicopters**
**13725 Marignane Cedex (FR)**

(72) Inventeurs:
• **MEUTERLOS, Maxime**
**13009 Marseille (FR)**
• **MACCHI, Lucas**
**13510 Eguilles (FR)**
• **CAMERINI, Valerio**
**13007 Marseille (FR)**

(74) Mandataire: **GPI Brevets**
**1330, rue Guillibert de la Lauzière**
**EuroParc de Pichaury**
**Bât B2**
**13856 Aix en Provence Cedex 3 (FR)**

(56) Documents cités:
**EP-A1- 4 091 945**    **EP-A2- 2 345 894**
**US-A1- 2022 163 428**

**Description**

La présente invention se situe dans le domaine des systèmes de surveillance de santé des systèmes mécaniques.

La présente invention concerne un procédé et un dispositif de surveillance de santé d'un système mécanique équipant un véhicule en utilisant des seuils variables selon des paramètres de fonctionnement du système.

Un système mécanique peut comporter plusieurs organes en mouvement, par exemple plusieurs organes tournants, tels un arbre d'entrée et un arbre de sortie.

Par exemple, un système mécanique peut comporter un ou des paliers afin de guider en rotation un arbre d'entrée et un arbre de sortie voire un ou des organes tournants intermédiaires. Un palier comporte, par exemple, un roulement muni d'une ou de plusieurs rangées d'éléments roulants tels que des billes, des rouleaux ou autres.

Un système mécanique peut être aussi muni d'au moins une roue dentée, un pignon, une couronne dentée.

Le fonctionnement d'un système mécanique peut être surveillé pour détecter une anomalie de fonctionnement, voire anticiper l'apparition d'une panne ou d'un dysfonctionnement. Un aéronef peut ainsi comprendre un système de surveillance embarqué pour surveiller la santé un système mécanique afin d'augmenter la sécurité du vol.

Un tel système de surveillance peut, quel que soit le système mécanique surveillé, mesurer et enregistrer des données opérationnelles du système mécanique, en particulier de nature vibratoire. Ce système de surveillance peut alors déterminer des valeurs d'indicateurs de santé en fonction de ces données opérationnelles et les comparer à des seuils prédéfinis pour détecter une potentielle anomalie liée à un défaut mécanique naissant. La valeur de chaque seuil peut être obtenue par l'expérience ou par une analyse statistique d'un historique de mesures issues de plusieurs systèmes mécaniques similaires acquis lors de phases d'essais, de validation ou encore pendant les premières heures d'utilisation d'un tel système mécanique. Les seuils peuvent par exemple être estimés à partir d'une modélisation paramétrique de la statistique de l'indicateur de santé avec comme hypothèse que le système mécanique est sain, à savoir sans anomalie, dysfonctionnement ni défaut.

La valeur de chaque seuil peut être constante sur l'ensemble de la plage de fonctionnement du système mécanique. Chaque seuil de détection peut alternativement comporter plusieurs valeurs constantes relatives respectivement à des phases spécifiques de fonctionnement du système mécanique.

Un indicateur de santé peut prendre la forme d'un indicateur vibratoire évalué à l'aide d'au moins un capteur, ce capteur pouvant comporter au moins un accéléromètre, un tachymètre. Un tel indicateur de santé peut être défini à l'aide d'un signal fourni par un seul capteur, en étant par exemple égal à l'amplitude maximale d'un signal vibratoire temporel fourni par un accéléromètre ou en combinant les signaux de plusieurs capteurs. C'est par exemple le cas des systèmes de surveillance de santé désignés par l'acronyme *HUMS* pour « Health and Usage Monitoring System » en langue anglaise Un indicateur de santé peut permettre de surveiller un système mécanique dans son ensemble alors que d'autres indicateurs de santé peuvent être spécifiques à un type de défaut particulier pouvant apparaitre sur un organe particulier du système mécanique.

Les documents US 7684936, US 2017/0023438, US 8442778, US 8131420, CN 102963533 et US 2011/0166799 décrivent des systèmes de surveillance *HUMS.* Les documents US 8442778 et US 2017/0023438 sont destinés en particulier à la surveillance d'éoliennes. Les documents US 8131420, CN 102963533 et US 2011/0166799 sont dédiés à des aéronefs à voilure tournante.

En particulier, le document CN 102963533 présente un système de surveillance. Ce système de surveillance comprend un système embarqué permettant d'identifier en temps réel un risque et de générer une alerte, ainsi qu'un système déporté au sol capable de télécharger et d'analyser les données acquises en vol afin de planifier les opérations de maintenance nécessaires.

Le document US 2011/0166799 décrit quant à lui un système de surveillance déterminant un indicateur de santé dont la valeur est ajustée en fonction d'un paramètre de fonctionnement du système mécanique surveillé, et en particulier en fonction d'un couple exercé sur un organe tournant. Cet indicateur de santé peut ensuite être comparé à un seuil pour estimer un risque d'apparition d'un défaut.

De tels systèmes de surveillance sont intéressants mais les indicateurs de santé usuels sont dépendants des conditions de fonctionnement du système mécanique. Ces conditions de fonctionnement sont, par exemple, caractérisées par des paramètres de contexte. Ces paramètres de contexte sont, par exemple, l'altitude ou la vitesse d'avancement de l'aéronef, le couple exercé au sein d'une boite de transmission, la vitesse de rotation d'un rotor... Cette dépendance peut se traduire par une non stationnarité des indicateurs de santé sur la totalité du domaine de fonctionnement du système mécanique et/ou de l'aéronef. Dès lors, ces indicateurs de santé peuvent n'être exploitables que durant des régimes de fonctionnement particuliers. En conséquence, la surveillance de la santé d'un système mécanique peut être restreinte à certaines périodes d'utilisation, excluant tout régime transitoire notamment, ce qui peut retarder la détection d'un défaut, ou au contraire provoquer la détection de fausses pannes.

Des méthodes spécifiques appliquées sur les indicateurs de santé ont alors pour but d'améliorer la détection de défaut, en particulier en prenant en compte les conditions de fonctionnement du système mécanique.

Par exemple, le document EP 2345894 décrit un procédé d'indication d'un défaut se propageant dans un arbre rotatif. Après des mesures de données correspondant à un indicateur de santé de l'arbre et des mesures d'un facteur d'entrée, par exemple un couple exercé sur l'arbre, une relation entre l'indicateur de santé et le facteur d'entrée est déterminée. Un indicateur de santé filtré est alors déterminé sur la base de cette relation et d'un effet du facteur d'entrée sur l'indicateur de santé, cet effet étant estimé à l'aide d'un filtre de Kalman, d'une estimation récursive des moindres carrés et/ou d'un filtre à particules.

Le document EP 4091945 décrit un procédé pour détecter des défauts dans un système de transmission d'un aéronef. Ce procédé propose d'acquérir, lors de plusieurs intervalles de temps, un signal relatif au comportement dynamique du système de transmission ainsi que des valeurs de paramètres de vol de l'aéronef. Des groupes d'indicateurs relatifs à chaque intervalle de temps sont déterminés à partir de ces signaux. Une estimation de la probabilité que les valeurs des indicateurs d'un groupe d'indicateurs soient anormales par rapport à une condition d'apprentissage prédéfinie est calculée pour chaque indicateur du groupe d'indicateurs, en prenant en compte les paramètres de vol mesurés. Des indicateurs de santé sont déterminés en fonction de cette estimation de la probabilité, puis comparés avec un seuil pour identifier la présence d'un défaut.

Le document WO 2011/023596 décrit un procédé et un système pour contrôler des vibrations dans une éolienne. Une plage de valeurs caractéristiques de vibrations est prédite à partir de données de fonctionnement en temps réel d'un générateur électrique de l'éolienne selon des règles extraites d'un ensemble de règles. Une comparaison en temps réel des valeurs caractéristiques de fonctionnement du générateur avec un seuil calculé est effectuée pour détecter et signaler une possible présence de défaut sur le générateur électrique.

Le document CN 107218997 décrit un procédé de détection de défauts sur un groupe hydroélectrique basé sur l'identification des conditions de fonctionnement du groupe hydroélectrique. Des données historiques de vibrations sont exploitées pour estimer un seuil. Un signal d'état de fonctionnement du groupe hydroélectrique est acquis afin de déterminer les conditions de fonctionnement du groupe hydroélectrique. Une anomalie peut ainsi être détectée de manière sensible en fonction des données historiques de vibration et de l'état de fonctionnement identifié grâce au signal d'état lorsque les valeurs de vibration dépassent le seuil.

Le document US 2022/0163428 divulgue un système et un procédé de surveillance de l'état d'un amortisseur d'une turbine à gaz. Une telle turbine à gaz comprend un composant tournant, un roulement couplé de manière fonctionnelle à ce composant tournant, et un amortisseur associé au roulement, ainsi que des capteurs et un contrôleur. Le contrôleur reçoit des données relatives à de paramètres détectées et/ou calculées, et génère un indice relatif à l'amortisseur basé sur ces données et caractéristique d'un état de santé de l'amortisseur. Lorsque cet indice dépasse un seuil prédéterminé, une notification indiquant l'état de santé de l'amortisseur est générée. Un type de défaut subi par l'amortisseur et une durée de vie utile restante de l'amortisseur peuvent également être déterminés.

La présente invention a alors pour but de proposer un procédé et un dispositif innovants visant à surveiller un système mécanique d'un véhicule afin de détecter au plus tôt l'apparition d'un défaut sur le système mécanique tout en limitant le risque de fausse détection d'un défaut.

La présente invention a, par exemple, pour objet un procédé de surveillance de santé d'un système mécanique équipant un véhicule, le système mécanique comportant au moins un organe en mouvement ainsi qu'au moins un capteur vibratoire émettant un signal vibratoire, le système mécanique ou le véhicule comportant au moins un capteur de contexte émettant un signal de contexte relatif à au moins un paramètre de contexte, ledit au moins un paramètre de contexte étant choisi dans une liste comportant au moins un ou plusieurs paramètres fonctionnels du système mécanique, un ou plusieurs paramètres de navigation du véhicule et un ou plusieurs paramètres atmosphériques.

Ce procédé est composé d'une phase initiale de définition d'un modèle de variation de seuil en fonction dudit au moins un paramètre de contexte, cette phase initiale étant suivie d'une phase de surveillance opérationnelle du système mécanique.

La phase initiale comporte les étapes suivantes :

- mesures de valeurs initiales vibratoires successives issues dudit au moins un capteur vibratoire et de valeurs initiales de contexte successives issues dudit au moins un capteur de contexte,
- détermination, à l'aide d'un calculateur, de plusieurs valeurs initiales de santé d'au moins un indicateur de santé $CI$ relatif au système mécanique en fonction des valeurs initiales vibratoires, chaque valeur initiale de santé étant associée à une des valeurs initiales de contexte dudit au moins un paramètre de contexte,
- définition pour chaque indicateur de santé $CI$, d'un modèle de variation de seuil, le modèle de variation de seuil étant défini en fonction des valeurs initiales de santé de l'indicateur de santé $CI$ et des valeurs initiales de contexte dudit au moins un paramètre de contexte, en partitionnant un domaine formé par les valeurs initiales de contexte dudit au moins un paramètre de contexte en plusieurs plages de valeurs pour lesquelles le seuil relatif à l'indicateur de santé $CI$ est statistiquement constant sur chaque plage de valeurs, chaque plage étant associée à plusieurs des valeurs initiales de contexte, et en déterminant des valeurs du seuil avec une méthode utilisant des régressions sur des paramètres de distributions de quantiles conditionnées sur des paramètres de contexte et des décompositions de domaine dudit au moins un paramètre de contexte à l'aide d'au moins un arbre de décision.

La phase de surveillance opérationnelle comporte les étapes suivantes lors du fonctionnement du système mécanique :

- mesures de valeurs opérationnelles vibratoires successives issues dudit au moins un capteur vibratoire, et de valeurs opérationnelles de contexte successives issues dudit au moins un capteur de contexte,
- détermination, avec le calculateur, d'une valeur opérationnelle de santé d'au moins un indicateur de santé $CI$ en fonction des valeurs opérationnelles vibratoires, la valeur opérationnelle de santé d'un indicateur de santé $CI$ étant associée à une des valeurs opérationnelles de contexte relatives à un ou plusieurs paramètres de contexte,
- détermination du seuil propre à la valeur opérationnelle de santé dudit au moins un indicateur de santé $CI$ à l'aide du modèle de variation de seuil et de ladite au moins une valeur opérationnelle de contexte associée,
- déclenchement d'une alerte signalant un risque de présence d'un défaut sur le système mécanique si la valeur opérationnelle de santé dudit au moins un indicateur de santé $CI$ est supérieure au seuil déterminé.

Selon ce procédé, un ou plusieurs indicateurs de santé $CI$ sont déterminés pendant la phase initiale à partir de mesures issues dudit au moins un capteur vibratoire, puis un modèle de variation de seuil est défini pour chaque indicateur de santé $CI$ en fonction des valeurs de cet indicateur de santé $CI$ et des mesures issues dudit au moins un capteur de contexte sur cette phase initiale à l'aide de régressions sur des paramètres de distributions de quantiles. Pour définir ce modèle de variation, au moins un arbre de décision est utilisé afin de définir une ou plusieurs plages du ou des paramètres de contexte pour lesquelles le seuil relatif à l'indicateur de santé $CI$ est statistiquement constant. On considère qu'un seuil relatif à un indicateur de santé $CI$ est statistiquement constant, sur une plage de valeurs contiguës d'un paramètre de contexte, si pour toute division de ladite plage de valeurs en deux sous-plages de valeurs contiguës, les seuils estimés respectivement sur les deux sous-plages de valeurs sont considérés identiques selon un test statistique. Un tel test statistique peut être par exemple un test de Welch.

Le terme « chaque » est utilisée par commodité, aussi bien en présence d'un unique indicateur de santé $CI$ que des indicateurs de santé $CI$ pour faciliter la lecture.

La phase initiale peut ainsi être une période d'apprentissage permettant de définir le modèle de variation de seuil pour chaque indicateur de santé $CI$ du système mécanique. Cette phase initiale est réalisée suite à la première utilisation du véhicule ou bien suite à une opération de maintenance significative, par exemple suite au remplacement du système mécanique. Durant cette période d'apprentissage, le système mécanique est considéré comme étant sans défaut. Cette phase initiale permet de la sorte de déterminer le modèle de variation de seuil du système mécanique considéré comme étant sain du véhicule.

Suite à cette période d'apprentissage et à la définition du modèle de variation de seuil, la surveillance de la santé du système mécanique est assurée à l'aide du modèle de variation de seuil pendant la phase de surveillance opérationnelle. Le procédé selon l'invention permet ainsi d'adapter la valeur du seuil à laquelle est comparé un indicateur de santé $CI$ aux paramètres de contexte ce qui permet d'améliorer la détection d'un défaut mécanique, ou d'une anomalie liée à un défaut mécanique naissant, tout en réduisant le taux de fausse détection.

La fiabilité et la disponibilité du système mécanique et du véhicule équipé de ce système sont ainsi améliorées grâce au procédé selon l'invention, par rapport aux méthodes de surveillance traditionnelle dont le seuil est généralement algébriquement constant sur tout le domaine d'utilisation du véhicule.

En outre, les paramètres de contexte peuvent comporter des paramètres de fonctionnement du système mécanique, tels que la vitesse de rotation d'un ou de plusieurs arbres en rotation, le ou les couples au niveau de cet ou de ces arbres, la température du système mécanique par exemple.

Les paramètres de contexte peuvent comporter des paramètres de fonctionnement du véhicule, et notamment d'un aéronef, équipé du système mécanique, tels que la vitesse d'avancement de ce véhicule, son éventuelle vitesse verticale, son altitude, la vitesse de rotation d'un rotor par exemple.

Les paramètres de contexte peuvent encore comporter des paramètres atmosphériques, tels que la température et la pression atmosphérique à l'extérieure du système mécanique par exemple.

Ainsi, le ou les capteurs de contexte permettent de mesurer des caractéristiques de contexte relatives au fonctionnement du système mécanique, et/ou du véhicule en tant que tel, ainsi que relatives à l'environnement, et d'émettre un signal de contexte temporel, porteur d'informations relatives à ces caractéristiques de contexte, vers un calculateur par exemple. Le signal de contexte temporel est porteur des valeurs initiales de contexte lors de la phase initiale de définition d'un modèle de variation de seuil, et des valeurs opérationnelles de contexte lors de la phase de surveillance opérationnelle du système mécanique.

Le signal vibratoire et le signal de contexte peuvent être générés simultanément, voire de façon synchronisée.

Un calculateur peut être présent dans le véhicule ou présent sur une station désolidarisée du véhicule. Les signaux vibratoires et de contexte peuvent être stockés dans une mémoire du calculateur ou dans une mémoire présente dans le véhicule et éventuellement reliée au calculateur par une liaison filaire ou non filaire par exemple.

Le procédé selon l'invention peut comporter une ou plusieurs des caractéristiques qui suivent, prises seules ou en combinaison.

Selon un exemple, la définition du modèle de variation de seuil peut être réalisée à l'aide d'un seul arbre de décision. Alternativement, la définition du modèle de variation de seuil peut être réalisée par agrégation d'au moins deux arbres de décision.

Selon un autre exemple compatible avec les précédents, la définition du modèle de variation de seuil peut être réalisée avec un taux minimum de fausses alarmes prédéterminé et un taux de confiance prédéterminé dans le taux minimum de fausses alarmes. L'utilisation de ce taux minimum de fausses alarmes, correspondant à une probabilité d'émission de fausses alarmes, permet ainsi de réduire le taux de fausse détection, et par suite, le taux d'émission de fausses alarmes, limitant ainsi les immobilisations du système mécanique et du véhicule alors qu'aucun défaut n'est présent.

Selon un autre exemple compatible avec les précédents, la phase initiale peut comporter une étape d'analyse pour analyser une sensibilité de chaque indicateur de santé *CI* aux paramètres de contexte et pour sélectionner des paramètres de contexte influents. Cette étape d'analyse est réalisée après la détermination de plusieurs valeurs initiales de santé de chaque indicateur de santé *CI* et avant la définition d'un modèle de variation de seuil.

De la sorte, les paramètres de contexte les plus influents sur les variations de chaque indicateur de santé *CI* sont déterminés et sélectionnés durant cette analyse. En conséquence, seuls ces paramètres de contexte sélectionnés sont pris en compte dans la définition du modèle de variation de seuil pour chaque indicateur de santé *CI* et, par la suite, pour déterminer le seuil variable.

Alternativement, la phase initiale peut comporter une étape de présélection pour sélectionner des paramètres de contexte pris en compte par le procédé parmi une multitude de paramètres de contexte mesurés par des capteurs de contexte. Cette étape de présélection est réalisée avant les mesures des valeurs initiales vibratoires et de contexte.

Dans ce cas, les paramètres de contexte les plus influents sur les variations de chaque indicateur de santé *CI* sont sélectionnés préalablement à la réalisation de la phase initiale, par exemple par une analyse empirique de mesures sur d'autres systèmes mécaniques par exemple équivalents ou similaires. En conséquence, seuls ces paramètres de contexte préalablement sélectionnés sont pris en compte dans la définition du modèle de variation de seuil pour chaque indicateur de santé *CI* et, par la suite, pour déterminer le seuil variable.

Selon un autre exemple compatible avec les précédents, lesdites valeurs initiales dudit au moins un indicateur de santé *CI* peuvent être calculées à partir d'une décomposition en coefficients de Fourier des valeurs initiales vibratoires successives modélisées avec une hypothèse de cyclostationnarité d'ordre un et deux du signal vibratoire, qui suit une loi du Khi-deux, généralisée par une distribution GAMMA.

La présente invention vise aussi un programme d'ordinateur comprenant des instructions qui, lorsque le programme est exécuté, conduisent à mettre en œuvre les différents exemples du procédé de surveillance précédemment décrit. Ce programme d'ordinateur peut être stocké par exemple dans une mémoire d'un calculateur présent dans le véhicule, ou dans une mémoire située dans le véhicule et reliée au calculateur, voire dans une mémoire d'une station désolidarisée du véhicule.

Ce programme d'ordinateur peut être mis en œuvre totalement par un calculateur présent dans le véhicule ou un ordinateur du véhicule, ou conjointement par un tel calculateur ou ordinateur présent dans le véhicule et par une station désolidarisée du véhicule.

La présente invention vise aussi un dispositif de surveillance configuré pour surveiller un système mécanique équipant un véhicule, le système mécanique comportant au moins un organe en mouvement, le dispositif de surveillance comportant au moins un capteur vibratoire émettant un signal vibratoire, au moins un capteur de contexte émettant au moins un signal de contexte relatif à au moins un paramètre de contexte et un calculateur.

Le dispositif de surveillance est configuré pour la mise en œuvre des différents exemples du procédé de surveillance de santé précédemment décrits.

En outre, le calculateur peut comporter une unique unité de calcul embarquée dans le véhicule. Dès lors, l'ensemble du procédé de surveillance peut être réalisé dans le véhicule, aussi bien lorsque le véhicule est à l'arrêt ou en fonctionnement.

Alternativement, le calculateur peut comporter une unique unité de calcul désolidarisée du véhicule, et présente par exemple dans une station extérieure au véhicule. Dans ce cas, l'étape de mesures des valeurs initiales vibratoires et des valeurs initiales de contexte est réalisée dans le véhicule en fonctionnement pendant la phase initiale de définition d'un modèle de variation de seuil, puis la station reçoit ces valeurs initiales vibratoires et ces valeurs initiales de contexte, l'unité de calcul de la station effectuant les étapes de détermination des valeurs initiales de santé de chaque indicateur de santé *CI,* et de définition du modèle de variation de seuil. Pendant la phase opérationnelle, l'étape de mesures des valeurs opérationnelles vibratoires et des valeurs opérationnelles de contexte est réalisée dans le véhicule en fonctionnement, alors que les étapes de détermination de la valeur opérationnelle de santé de chaque indicateur de santé *CI* de détermination du seuil propre à la valeur opérationnelle de santé de chaque indicateur de santé *CI,* et de déclenchement d'une alerte d'un risque de présence d'un défaut sur le système mécanique si la valeur opérationnelle de santé d'au moins un indicateur de santé *CI* est supérieure au seuil déterminé sont réalisées par l'unité de calcul de la station.

Alternativement, le calculateur peut comporter une unité de calcul embarquée dans le véhicule et une unité de calcul désolidarisée du véhicule, et présente par exemple dans une station extérieure au véhicule. Dans ce cas, l'étape de mesures des valeurs initiales vibratoires et des valeurs initiales de contexte de la phase initiale et l'étape de mesures des valeurs opérationnelles vibratoires et des valeurs opérationnelles de contexte de la phase opérationnelle sont réalisées dans le véhicule en fonctionnement. Les autres étapes du procédé peuvent être réalisées soit dans le véhicule en fonctionnement ou l'arrêt, soit dans la station extérieure au véhicule qui reçoit ces valeurs initiales vibratoires et ces valeurs initiales de contexte ainsi que ces valeurs opérationnelles vibratoires et ces valeurs opérationnelles de contexte.

La présente invention vise aussi un système mécanique comportant au moins un organe en mouvement et un dispositif de surveillance tel que précédemment décrit. Ce système mécanique peut par exemple être une boîte de transmission de puissance d'un véhicule, et d'un aéronef en particulier.

La présente invention vise aussi un véhicule et en particulier un aéronef, comportant un tel système mécanique.

L'invention et ses avantages apparaîtront avec plus de détails dans le cadre de la description qui suit avec des exemples donnés à titre illustratif en référence aux figures annexées qui représentent :

- la figure 1, une vue schématique de côté d'un aéronef,
- la figure 2, un schéma illustrant un processus de surveillance d'un système mécanique selon l'invention,
- la figure 3, un diagramme illustrant un procédé de surveillance d'un système mécanique selon l'invention,
- la figure 4, un schéma illustrant un histogramme d'un indicateur de santé conditionné sur un paramètre de contexte,
- la figure 5, un schéma illustrant un arbre de décision unique associé à deux paramètres de contexte,
- la figure 6, un schéma illustrant la séparation d'un bloc de données relatif aux valeurs d'un indicateur de santé dans un espace de deux paramètres de contexte,
- la figure 7, une courbe illustrant la variation de la statistique de Welch en fonction d'un paramètre de contexte,
- la figure 8, un schéma illustrant une discrétisation bidimensionnelle d'un bloc de données en fonction de deux paramètres de contexte,
- la figure 9, un schéma illustrant une agrégation d'arbres de décision,
- la figure 10, un schéma illustrant un modèle de variation du seuil, et
- la figure 11, un graphique représentant des courbes d'un seuil variable.

Les éléments présents dans plusieurs figures distinctes sont affectés d'une seule et même référence.

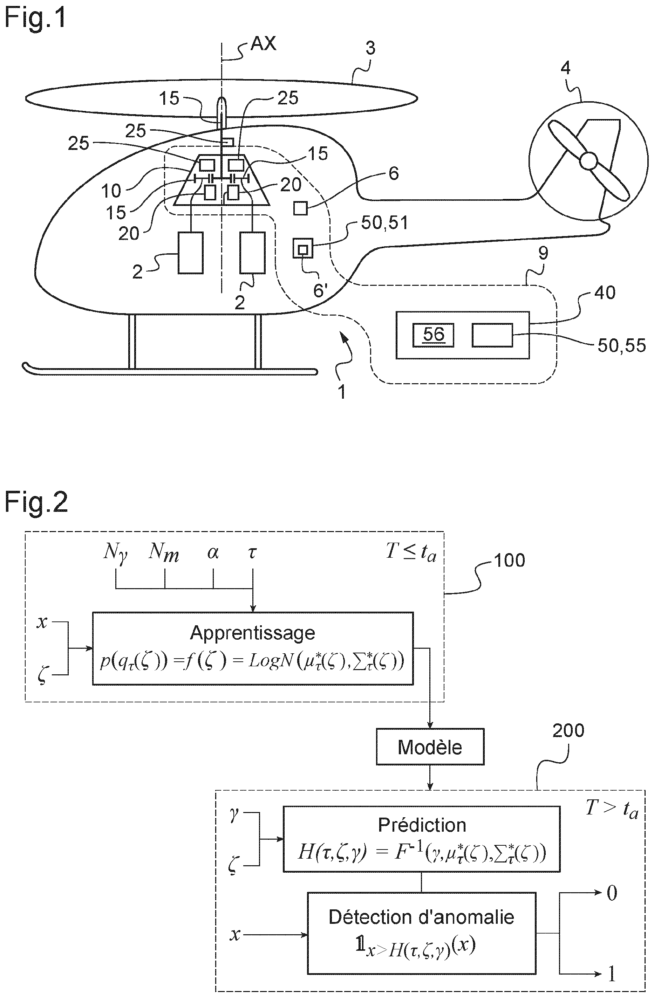

La figure 1 représente un véhicule 1, et un aéronef à voilure tournante de type giravion en particulier. Ce véhicule 1 comporte un système mécanique 10 muni d'un ou de plusieurs organes 15 en mouvement. Ces organes 15 sont par exemple en rotation autour d'un axe AX de rotation.

Le système mécanique 10 peut par exemple comporter un arbre de sortie ou un arbre d'entrée. Le système mécanique 10 peut également comporter un ou plusieurs paliers de guidage en rotation par exemple pour le guidage en rotation d'au moins un organe tournant. Un palier comporte par exemple un roulement muni d'éléments roulants.

Le système mécanique 10 peut aussi comporter par exemple au moins une roue dentée, un pignon, une couronne dentée, fixe ou mobile.

Un système mécanique 10 peut être, par exemple, une boîte de vitesse ou une boîte de transmission de puissance du véhicule 1. Ce système mécanique 10 peut être relié, par exemple, à un ou plusieurs moteurs 2, via respectivement un ou plusieurs arbres d'entrée et peut entraîner en rotation un rotor via un arbre de sortie, tel que par exemple un rotor principal 3 ou un rotor auxiliaire 4 d'un giravion comme représenté sur la figure 1. Selon un autre exemple, un système mécanique 10 peut être une voilure tournante.

Alternativement, un tel système mécanique 10 peut, par exemple, être agencé dans une boîte de vitesse ou une boîte de transmission de puissance d'un véhicule 1 ou tout autre équipement mécanique.

Ces exemples sont simplement donnés pour illustrer l'invention.

Quel que soit son agencement, le système mécanique 10 comprend aussi un dispositif de surveillance 9 destiné à surveiller le système mécanique 10 afin de détecter et d'identifier la présence d'un défaut, ou un risque d'apparition d'un défaut.

Le dispositif de surveillance 9 comporte un ou plusieurs capteurs vibratoires 20, un ou plusieurs capteurs de contexte 25 et un calculateur 50. Le calculateur 50 peut être dédié au dispositif de surveillance 9 ou bien être partagé avec d'autres dispositifs du véhicule 1.

Chaque capteur vibratoire 20 peut émettre un signal vibratoire temporel relatif à un comportement vibratoire du système mécanique 10 dans son ensemble, ou à un comportement vibratoire particulier d'un organe 15 du système mécanique 10, par exemple d'un arbre, d'un palier ou encore d'un engrenage. Le signal vibratoire temporel est porteur de valeurs vibratoires successives relatives aux vibrations du système mécanique 10, selon par exemple une fréquence d'échantillonnage. Le ou les capteurs vibratoires 20 peuvent comporter, par exemple, un accéléromètre, un tachymètre ou autres.

Chaque capteur de contexte 25 peut émettre un signal de contexte temporel relatif à une caractéristique de contexte liée au fonctionnement du système mécanique 10 et/ou du véhicule 1 ainsi qu'à l'environnement. Le signal de contexte temporel est porteur de valeurs initiales de contexte successives relatives à un paramètre de contexte lié au système mécanique 10, au véhicule 1 et/ou à l'environnement, selon par exemple une fréquence d'échantillonnage.

Les paramètres de contexte peuvent comporter des paramètres de fonctionnement du système mécanique 10, tels que la vitesse de rotation d'un ou de plusieurs arbres en rotation, le ou les couples au niveau de cet ou de ces arbres, la température du système mécanique 10 par exemple. Un ou des capteurs de contexte 25 peuvent alors comporter différents types de capteurs associés à chaque paramètre de fonctionnement du système mécanique 10, tel que par exemple un accéléromètre, un tachymètre, un couplemètre, ou autres. Un ou des capteurs de contexte 25 peuvent aussi comporter un capteur angulaire, tel un capteur de type codeur, permettant de mesurer une variation de la position angulaire d'un organe 15 tournant du système mécanique 10 afin, par exemple, de synchroniser les signaux vibratoires et les signaux de contexte avec la rotation et les positions angulaires de cet organe 15 tournant. Dans le cas où le véhicule 1 est un aéronef, les paramètres de contexte peuvent être gérés par un système embarqué désigné par l'acronyme *UMS* correspondant à la désignation anglaise « Usage Monitoring System ».

Les paramètres de contexte peuvent comporter des paramètres de fonctionnement du véhicule 1, tels que sa vitesse d'avancement, sa vitesse verticale, son altitude, la vitesse de rotation d'un rotor 3,4 par exemple. Un ou des capteurs de contexte 25 peuvent alors comporter différents types de capteurs associés à chaque paramètre de fonctionnement du véhicule 1, tel que par exemple un accéléromètre, un tachymètre, un altimètre, ou autres.

Les paramètres de contexte peuvent encore comporter des paramètres atmosphériques liés aux conditions atmosphériques, tels que la température extérieure au système mécanique 1 et la pression atmosphérique par exemple. Un ou des capteurs de contexte 25 peuvent alors comporter un thermomètre et/ou un baromètre par exemple.

En outre, le calculateur 50 peut comporter une unique unité de calcul 51 embarquée dans le véhicule 1.

Alternativement, le calculateur 50 peut comporter une unique unité de calcul 55 désolidarisée du véhicule 1, et présente par exemple dans une station 40 extérieure au véhicule 1.

Alternativement, le calculateur 50 peut comporter une unité de calcul 51 embarquée dans le véhicule 1 et une unité de calcul 55 désolidarisée du véhicule 1, et présente par exemple dans une station 40 extérieure au véhicule 1.

Chaque unité de calcul 51,55 peut comporter au moins un processeur et au moins une mémoire 6', au moins un circuit intégré, au moins un système programmable ou bien au moins un circuit logique, ces exemples ne limitant pas la portée donnée à l'expression «unité de calcul». Le calculateur 50 peut aussi être relié à une mémoire 6',56 présente dans le véhicule 1 ou dans la station 40, par une liaison filaire ou une liaison sans fil. Le calculateur 50 peut également comporter une mémoire 6'.

Les signaux vibratoires et de contexte peuvent ainsi être stockés dans la mémoire 6,6' après avoir été transmis vers cette mémoire 6,6', par une liaison filaire ou une liaison sans fil, les signaux vibratoires et de contexte pouvant être des signaux analogiques ou numériques, électriques ou optiques.

La mémoire 6,6',56 peut aussi stocker un programme d'ordinateur comprenant des instructions qui, lorsque le programme est exécuté, conduisent à la réalisation d'un procédé de surveillance de santé du système mécanique 10. Ce procédé de surveillance de santé du système mécanique 10 est dédié à la surveillance de la santé, par exemple vibratoire, du système mécanique 10.

En outre, chaque capteur vibratoire 20 et chaque capteur de contexte 25 peuvent émettre de façon continue respectivement un signal vibratoire et un signal de contexte.

Un signal vibratoire et un signal de contexte peuvent être des signaux formés par des mesures brutes émises respectivement par un capteur vibratoire et un capteur de contexte ou par des mesures obtenues par un traitement de signal plus ou moins complexe effectué par une unité de traitement, par exemple intégré au capteur correspondant, à partir de telles mesures brutes, par exemple via un filtrage ou un échantillonnage usuel, voir l'application de transformations.

Le procédé de surveillance de santé du système mécanique 10 selon l'invention comporte deux phases 100,200 comme représenté sur le schéma de la figure 2.

Au cours d'une phase initiale 100, un modèle de variation de seuil H est défini, le seuil variant en fonction du ou des paramètres de contexte et étant destiné à être comparé à un indicateur de santé *CI* pour la surveillance de la santé du système mécanique 10. Ensuite, une phase de surveillance opérationnelle 200 est exécutée au cours de laquelle est effectuée une surveillance du système mécanique 1 à l'aide du seuil déterminé avec le modèle en fonction du ou des paramètres de contexte. Durant la phase initiale 100, le système mécanique 10 est considéré sain, et donc sans anomalie ni défaut.

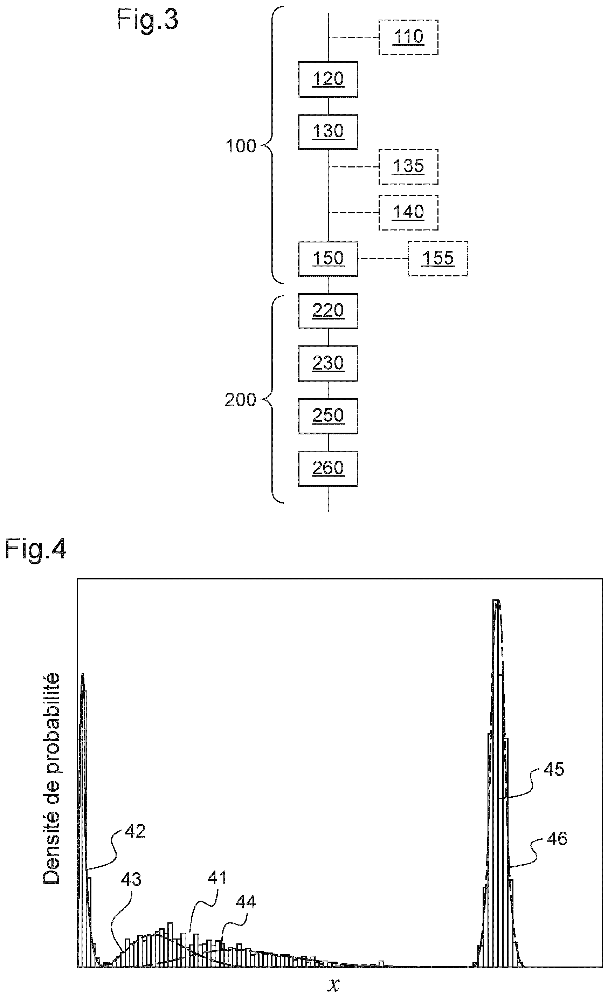

La phase initiale 100 comporte plusieurs étapes comme représenté sur la figure 3.

La phase initiale 100 peut tout d'abord comporter une étape de présélection 110 pour sélectionner des paramètres de contexte pris en compte par le procédé parmi une multitude de paramètres de contexte mesurés par le ou les capteurs de contexte 25. En effet, de très nombreux paramètres de contexte, par exemple plus de 1000 paramètres de contexte, peuvent être mesurés sur les systèmes complexes, et notamment sur un véhicule 1 tel un aéronef. De fait, afin de limiter les paramètres de contexte utilisés par le procédé selon l'invention, seulement une partie de ces paramètres de contexte mesurés sont pris en compte. Cette sélection peut être effectuée par retour d'expérience sur la base de systèmes mécaniques ou de véhicules similaires, les paramètres de contexte sélectionnés étant les paramètres les plus influents pour ces systèmes mécaniques ou véhicules similaires. Les paramètres de contexte sélectionnés peuvent être stockés dans la mémoire 6,6',56.

Cette étape de présélection 110 n'est pas essentielle à la réalisation du procédé selon l'invention et est donc optionnelle.

Au cours d'une étape de mesures 120, des valeurs initiales vibratoires et des valeurs initiales de contexte successives issues respectivement du ou des capteurs vibratoires 20 et du ou des capteurs de contexte 25 sont mesurées et émises vers la mémoire 6,6' embarquée pour y être stockées et/ou sont émises directement vers l'unité de calcul 51.

Ensuite, au cours d'une étape de détermination 130, plusieurs valeurs initiales de santé de chaque indicateur de santé $CI$ sont déterminées de façon usuelle en fonction des valeurs initiales vibratoires mesurées durant l'étape de mesures 120, à l'aide du calculateur 50. Les différentes valeurs initiales de santé de chaque indicateur de santé $CI$ correspondent respectivement à des instants différents de la phase initiale 100.

Une valeur initiale de santé d'un indicateur de santé $CI$ est par exemple égale à une valeur initiale issue d'un seul capteur vibratoire 20 ou le résultat d'une loi impliquant des valeurs initiales issues respectivement de plusieurs capteurs vibratoire 20. Dans le cas où le véhicule 1 est un aéronef, ces valeurs initiales de santé d'indicateurs de santé $CI$ sont par exemple déterminées à l'aide d'un système désigné par l'acronyme *HMS* correspondant à la désignation anglaise « Health Monitoring System ».

De plus, chaque valeur initiale de santé d'un indicateur de santé $CI$ est alors associée à la valeur initiale de contexte du ou de plusieurs paramètres de contexte mesurée sensiblement simultanément à la ou aux valeurs initiales vibratoires ayant permis de déterminer la valeur initiale de santé de cet indicateur de santé $CI.$ Par exemple, une valeur initiale de santé d'un indicateur de santé $CI$ est associée une valeur initiale de contexte de trois paramètres de contexte distincts.

Cette étape de détermination 130 peut être réalisée par l'unité de calcul 51 du calculateur 50 qui est embarquée dans le véhicule 1. Chaque valeur initiale d'un indicateur de santé $CI$ peut alors être stockée dans la mémoire 6,6' embarquée. Chaque valeur initiale du ou des indicateurs de santé $CI$ peut ainsi être calculée pendant l'utilisation du véhicule 1, sensiblement en temps réel, ou bien lors d'un arrêt du véhicule 1.

Alternativement, cette étape de détermination 130 peut être réalisée par l'unité de calcul 55 du calculateur 50 de la station 40, une fois le véhicule 1 à l'arrêt, et par exemple posé au sol dans le cas d'un aéronef. Dans ce but, les valeurs initiales de contexte et les valeurs initiales vibratoires sont transmises de la mémoire 6,6' présente dans le véhicule 1 à l'unité de calcul 55, par une liaison filaire ou une liaison sans fil, sous forme de signaux analogiques ou numériques, électriques ou optiques, par exemple, voire à l'aide d'une carte mémoire, au cours d'une étape de transmission 135, une fois le véhicule 1 à l'arrêt. Les valeurs initiales de contexte et les valeurs initiales vibratoires peuvent alors être stockées dans la mémoire 56 de la station 40. Chaque valeur initiale du ou des indicateurs de santé $CI$ peut ainsi être calculée après l'utilisation du véhicule 1, par l'unité de calcul 55, chaque valeur initiale d'un indicateur de santé $CI$ pouvant être stockée dans la mémoire 56.

La phase initiale 100 peut alors comporter, de façon alternative ou complémentaire à l'étape de présélection 110, une étape d'analyse 140 pour analyser une sensibilité de chaque indicateur de santé $CI$ aux paramètres de contexte et pour sélectionner des paramètres de contexte influents. Cette étape d'analyse permet de déterminer et de sélectionner, parmi les paramètres de contexte utilisés, les paramètres de contexte les plus influents sur les variations de chaque indicateur de santé $CI.$ Cette étape d'analyse 140 peut être réalisée par l'unité de calcul 51 embarquée dans le véhicule 1 ou par l'unité de calcul 55 du calculateur 50 de la station 40.

Au cours d'une étape de définition 150, un modèle de variation de seuil $H$ est défini pour chaque indicateur de santé $CI$ en fonction des valeurs initiales de santé de cet indicateur de santé $CI,$ considérées comme caractérisant un système mécanique 10 sain, et des valeurs initiales de contexte du ou des paramètres de contexte précédemment déterminées et stockées. Cette étape de définition 150 nécessite un nombre important de valeurs initiales de santé pour chaque indicateur de santé $CI$ afin que ce modèle de variation de seuil $H$ soit fiable et robuste. Ce nombre important de valeurs initiales de santé doit couvrir une grande partie du domaine d'utilisation du véhicule 1 afin de permettre par la suite de déterminer un seuil fiable et sûr dans tout le domaine d'utilisation du véhicule 1. Ce nombre important de valeurs initiales de santé est obtenu pendant une durée d'apprentissage $t_a$ minimale d'utilisation du véhicule 1, par exemple égale à 50 heures, correspondant sensiblement à la durée de la phase initiale 100.

Cette étape de définition 150 peut être effectuée par l'unité de calcul 51 du calculateur 50 embarquée dans le véhicule 1, avec les valeurs initiales du ou des indicateurs de santé $CI$ et des valeurs initiales de contexte stockées dans la mémoire 6,6'. Les valeurs initiales de contexte et les valeurs initiales du ou des indicateurs de santé $CI$ sont transmises de la mémoire 6,6' au calculateur 50, par exemple par une liaison filaire ou une liaison sans fil, sous forme de signaux analogiques ou numériques, électriques ou optiques, au cours d'une sous-étape de transmission 155 par exemple pendant le fonctionnement du véhicule 1 ou une fois le véhicule 1 à l'arrêt. Le modèle de variation de seuil $H$ peut alors être stocké dans la mémoire 6,6' présente dans le véhicule 1.

Alternativement, cette étape de définition 150 peut être effectuée par l'unité de calcul 55 du calculateur 50 de la station 40, avec les valeurs initiales du ou des indicateurs de santé *CI* et des valeurs initiales de contexte stockées dans la mémoire 6,6' du véhicule 1, après l'arrêt du véhicule 1. Les valeurs initiales de contexte et les valeurs initiales du ou des indicateurs de santé *CI* sont dans ce cas transmises de la mémoire 6,6' présente dans le véhicule 1 à l'unité de calcul 55 de la station 40, par exemple au cours d'une sous-étape de transmission 155. Le modèle de variation de seuil *H* peut alors être stocké dans la mémoire 56 de la station 40.

Alternativement, cette étape de définition 150 peut encore être effectuée par l'unité de calcul 55 de la station 40, avec les valeurs initiales du ou des indicateurs de santé *CI* et des valeurs initiales de contexte stockées dans la mémoire 56 de la station 40, après l'arrêt du véhicule 1. Le modèle de variation de seuil *H* peut alors être stocké dans la mémoire 56 de la station 40.

Le modèle de seuil *H* est dépendant des paramètres de contexte $\zeta$ et peut s'écrire $H(\tau,\zeta,\gamma) = f^{-1}(\zeta)$, avec $\tau$, un niveau de probabilité de la distribution de quantiles, correspondant à un taux de fausses alarmes demandée,

$\gamma$, un niveau d'incertitude sur le seuil estimé *H*, correspondant à un niveau de confiance sur ce taux de fausses alarmes demandée, et

$f^{-1}(\zeta)$, une fonction cumulative inverse d'une distribution log-normale fonction de $\zeta$.

Pour rappel, une variable *X* est dite suivre une loi log-normale si la variable $Y = log(X)$ suit une loi normale.

La fonction $f(\zeta)$ peut être estimée à partir d'une méthode utilisant des régressions par arbres de décision sur les paramètres de distributions de quantiles via une agrégation d'arbres de décision désignée souvent par l'expression en langue anglaise « Bagging Decision Tree ».

Un quantile $q_\tau$ est une valeur qui sépare un jeu de données suivant une proportion définie par une probabilité $\tau$. Pour un ensemble de paramètres de contexte $\zeta$, la fonction $f(\zeta)$ est une densité de probabilité qui caractérise la distribution de quantiles $p(q_\tau(\zeta))$ en fonction des paramètres de contexte $\zeta$. La distribution de quantiles $p(q_\tau(\zeta))$ est définie par la moyenne $\mu_\tau^*(\zeta)$ et la variance $\Sigma_\tau^*(\zeta)$. La fonction $f(\zeta)$ caractérise ainsi la relation entre les distributions de quantiles et les paramètres de contexte $\zeta$.

La fonction $f(\zeta)$ peut alors s'écrire :

$$f(\zeta) = p\big(q_\tau(\zeta)\big) = LogN[\mu_\tau^*(\zeta), \Sigma_\tau^*(\zeta)].$$

La moyenne $\mu_\tau^*(\zeta)$ et la variance $\Sigma_\tau^*(\zeta)$ peuvent être estimées à partir de l'image de la fonction $f(\zeta)$ pour un espace de paramètres de contexte $\zeta$ de dimension *p, p* étant également le nombre de paramètres de contexte $\zeta$ utilisés. Ainsi, si deux paramètres de contexte $\zeta$ distincts sont utilisés, ils forment un espace de paramètres de contexte à deux dimensions.

La méthode selon l'invention peut utiliser une modélisation statistique de la distribution de l'indicateur de santé *CI*. En outre, il est connu que les indicateurs de santé *CI* estimés à partir des coefficients de Fourier d'un signal vibratoire modélisé sous l'hypothèse de cyclostationnarité d'ordre un ou deux, suivent, dans le cas où le système mécanique 10 ne comporte pas de défaut, une loi du khi-deux. La généralisation de cette loi est une loi gamma $\Gamma$ à deux paramètres, un paramètre de forme $\alpha$ et un paramètre d'échelle $\beta$. La distribution statistique de l'indicateur de santé *CI* est ainsi modélisée par un mélange de distributions gamma. Une telle modélisation permet avantageusement de considérer des distributions de données plus complexes et offre donc une plus grande flexibilité. La densité de probabilité d'un tel mélange de distributions gamma pour la valeur x de l'indicateur de santé *CI* peut s'écrire : $p(x) = \sum_{n=1}^{K} \pi_n . p(x; \alpha_n, \beta_n)$, avec un coefficient de mélange $\pi$, et où la distribution $p(x;\ \alpha_n, \beta_n)$ est une distribution gamma tel que :

$p(x; \alpha_n, \beta_n) = \frac{1}{\beta_n^{\alpha_n} . \Gamma(\alpha_n)} x^{n-1} . e^{\frac{-x}{\beta_n}}$, avec $\Gamma()$, la fonction Gamma, et *K,* le nombre de distributions gamma.

Les paramètres du modèle de mélange $\{\alpha_k, \beta_k, \pi_k\}$ sont estimés avec un algorithme espérance-maximisation connu sous la désignation en langue anglaise « Expectation Maximization » alors que le nombre de distributions gamma *K* est estimé à partir d'un critère d'information Bayésien appelé *BIC* pour « Bayesian Information Criterion », avec comme condition $K \le N_\gamma$ où $N_\gamma$ est le nombre maximal de composantes de la distribution gamma à estimer.

Une fois le modèle de mélange estimé, il est possible d'estimer le quantile à un niveau de probabilité $\tau$, en définissant une distribution cumulative $F_x(t)$ tel que:

$$F_X(t) = \int_0^t \sum_{n=1}^K \pi_n \cdot p(x; \alpha_n, \beta_n)\, dx.$$

L'estimation du quantile $q_\tau$ calculé pour un niveau de probabilité $\tau$ revient à résoudre le problème d'optimisation sans contrainte selon lequel $q_\tau = argmin_t|g_\tau(t)|$, avec

$$g_\tau(t) = |F_X(t) - \tau| = |\int_0^t \sum_{k=1}^K \pi_n \cdot p(x; \alpha_n, \beta_n)\, dx - \tau|$$

Pour rappel, l'argument minimum (*argmin*) d'une fonction représente la valeur de la variable pour laquelle la valeur de la fonction concernée atteint son minimum, la valeur pour laquelle la fonction est minimalisée étant unique.

Il est tout d'abord nécessaire d'estimer les paramètres de la distribution de quantile. En premier lieu, une modélisation paramétrique de l'indicateur de santé *CI* conditionné sur un ou plusieurs paramètres de contexte est réalisée par un mélange de distributions Gamma. On utilise alors une méthode de détermination des incertitudes sur les paramètres du mélange de distributions Gamma par une méthode WLB désignée en langue anglaise « Weighted Likelihood Boostrap ». A chaque échantillonnage selon la méthode WLB, on estime une valeur de quantile $q_\tau$. Cette étape d'échantillonnage est réalisée $p$ fois afin d'obtenir un échantillon de valeur de quantile $q_\tau$, appelé $Q_\tau = \{q_{\tau 1}, ..., q_{\tau P}\}$.

A présent, la quantité $q_\tau \sim logN(\mu_\tau^*, \Sigma_\tau^*)$ est considérée comme une variable aléatoire modélisée par une distribution log Normale de paramètres : $\mu_\tau^*, \Sigma_\tau^*$.

On peut alors calculer une moyenne : $\mu_\tau^* = \log\left(\frac{\mu_\tau^2}{\sqrt{\Sigma_\tau + \mu_\tau^2}}\right)$, et $\mu_\tau = \frac{1}{N_b}\sum_{k=1}^{N_b} q_{\tau k}$, et une variance:

$$\Sigma_\tau^* = log\left(\frac{\Sigma_\tau}{\mu_\tau^2} + 1\right) \text{ et } \Sigma_\tau = \frac{1}{N_b}\sum_{k=1}^{N_b}\left(q_{\tau k} - \mu_\tau\right)^2.$$

La Figure 4 illustre un histogramme 41 de la densité de probabilité d'un indicateur de santé *CI,* selon la valeur x de cet indicateur de santé *CI.* Les courbes 42,43,44 représentent les variations des composantes Gamma identifié par le modèle de mélange selon la valeur x de cet indicateur de santé *CI.* L'histogramme 45 correspond à l'échantillon de quantile estimé et modélisé par une distribution Log Normale 46.

En outre, pour permettre la construction d'un modèle de régression via arbres de décision, la méthode effectue une division récursive de l'espace des paramètres de contexte afin de le diviser en plusieurs plages pour lesquelles le seuil relatif à l'indicateur de santé *CI* est statistiquement constant, à savoir que, pour une plage de valeurs d'un paramètre de contexte donné, deux seuils distincts issus d'une division supplémentaire de la plage de valeurs du paramètre de contexte en deux sous-plages ont par exemple un écart statistique inférieur à une valeur prédéterminée. Cette valeur prédéterminée est par exemple égale à la valeur critique de la statistique de Welch. Un tel critère de division permet de réduire la dissimilitude des distributions de quantiles sur l'espace des paramètres de contexte par exemple.

La méthode selon l'invention peut, par exemple, permettre d'exprimer la variabilité conditionnelle des indicateurs de santé *CI* à partir de la variabilité des distributions de quantiles, la dissimilitude des distributions de quantiles sur l'espace des paramètres de contexte étant estimée à partir d'une statistique de similarité ou statistique de Welch $S_j(k)$ entre deux distributions de quantiles caractérisées par leurs moyennes respectives $\mu_{\tau 1}$ et $\mu_{\tau 2}$ ainsi que par leurs variances respectives $\Sigma_{\tau 1}$ et $\Sigma_{\tau 2}$ selon la relation :

$$S_j(k) = \frac{|\mu_{\tau 1}(k) - \mu_{\tau 2}(k)|}{\sqrt{\frac{\Sigma_{\tau 1}(k) + \Sigma_{\tau 2}(k)}{N_b}}}.$$

Les indices $j$ et $k$ désignent respectivement l'index $j$ du paramètre de contexte $\zeta_j$, $j$ variant de 1 à $p$, et l'itération indiquant l'index $k$ de parcours sur ce paramètre de contexte $\zeta_j$, $N_b$ étant la dimension de l'échantillon de quantile $Q_\tau$. L'index $k$ de parcours est un itérateur indexé sur le vecteur défini par le paramètre de contexte $\zeta_j$. Les moyennes des échantillons $Q_\tau$ de quantiles $\mu_{\tau 1}(k)$ et $\mu_{\tau 2}(k)$ ainsi que les variances $\Sigma_{\tau 1}(k)$ et $\Sigma_{\tau 2}(k)$ sont estimées à partir de l'indicateur de santé *CI* conditionné sur le paramètre de contexte $\zeta_j$ à l'index de parcours *k*.

Une valeur maximale de la statistique de Welch peut être déterminée sur l'ensemble de l'espace des paramètres de contexte et permettre de déterminer la valeur du paramètre de contexte et le paramètre de contexte à discrétiser. Une

coordonnée de discrétisation $\zeta_{j*}^{k*}$ peut alors être choisie égale à la valeur maximale de la statistique de Welch suivant le paramètre de contexte $\zeta_j$ et l'index de parcours k, telle que : $\zeta_{j*}^{k*} = argmax_{j,k}[S_j(k)]$,
avec la fonction *argmax(S)*, donnant comme résultat le ou les points pour lesquels la fonction S atteint sa valeur maximale.

Cette coordonnée de discrétisation $\zeta_{j*}^{k*}$ permet de séparer une plage de valeurs d'un paramètre de contexte en deux sous-plages. Le processus de division récursive sur l'espace des paramètres de contexte peut s'arrêter lorsque par exemple au moins une des deux conditions suivantes est vérifiée, permettant de conclure que le seuil relatif à l'indicateur de santé *CI* est statistiquement constant sur ces deux sous-plages.

Pour une première condition, un nombre minimum de valeurs requis pour estimer une distribution de quantiles est atteint.

Pour une seconde condition, une hypothèse $H_0$, selon laquelle deux moyennes de distributions de quantiles ne sont plus statistiquement différentes, ne peut pas être rejetée. L'hypothèse $H_0$ peut s'écrire : $\mu_{\tau 1} = \mu_{\tau 2}$. Cette hypothèse $H_0$ ne peut notamment pas être rejetée si la valeur de la statistique de Welch $S_j(k)$ est inférieure à la valeur critique estimée à partir de la distribution inverse de la loi de Student suivant un niveau de probabilité $\alpha$. Une faible valeur du paramètre $\alpha$ favorise l'acceptation de l'hypothèse $H_0$.

Cette valeur critique estimée est par exemple égale à $t^{-1}\left(1 - \dfrac{\alpha}{2}, \nu\right)$, avec v, le nombre de degrés de liberté tel que : $v = \left\lfloor \dfrac{(N_b - 1).(\Sigma_{\tau 1} + \Sigma_{\tau 2})^2}{\Sigma_{\tau 1}^2 + \Sigma_{\tau 2}^2} \right\rfloor$.

Ce nombre v de degrés de liberté conditionne la valeur critique de la statistique de Welch et dépend de la variance de l'échantillon de quantile ainsi que la dimension de $Q_\tau$.

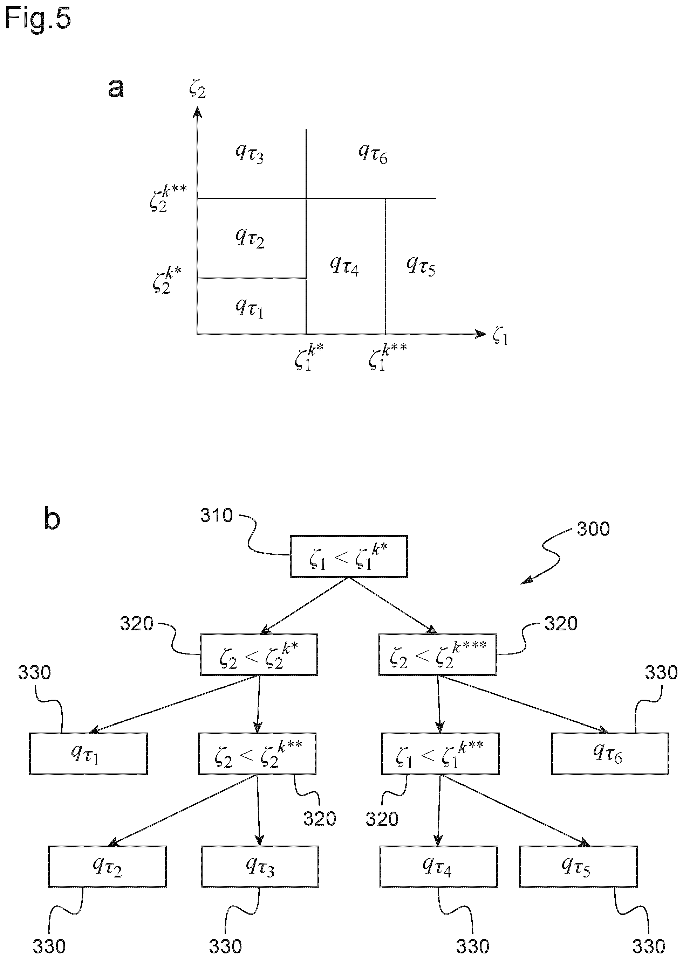

La construction et l'utilisation d'un arbre de décision 300 reposent sur la notion de choix booléen permettant de prendre une direction dans l'espace des paramètres de contexte comme illustré sur la figure 5 avec un exemple d'un unique arbre de décision 300. Les choix booléens concernent uniquement le nœud racine 310 et les nœuds de décision 320. Le nœud racine 310 est le premier nœud de l'arbre de décision 300 duquel découlent les nœuds de décision 320. Pour un couple de paramètres de contexte ou un unique paramètre de contexte, si la condition analysée au niveau d'un nœud 310,320 est vrai, la branche gauche est suivie. Dans le cas contraire, la branche droite doit être suivie. Cette règle est répétée jusqu'à arriver à un nœud feuille 330 contenant les paramètres des distributions de quantiles.

Indépendamment du nombre d'arbres de décision 300, les estimations du nœud racine 310, des nœuds de décision 320 et des nœuds feuilles 330 suivent la procédure suivante à partir du jeu de données $D=\{x,\zeta\}$.

L'exemple représenté sur la figure 5 concerne un arbre de décision 300 unique et un espace de deux paramètres de contexte, $Z=\{\zeta_1,\zeta_2\}$.

Un nombre minimum $N_m$ de valeurs x de l'indicateur de santé *CI* conditionné sur les paramètres de contexte $\zeta$ ainsi qu'un nombre maximal $N_\gamma$ de distributions gamma pour le modèle de mélange doivent être fixés.

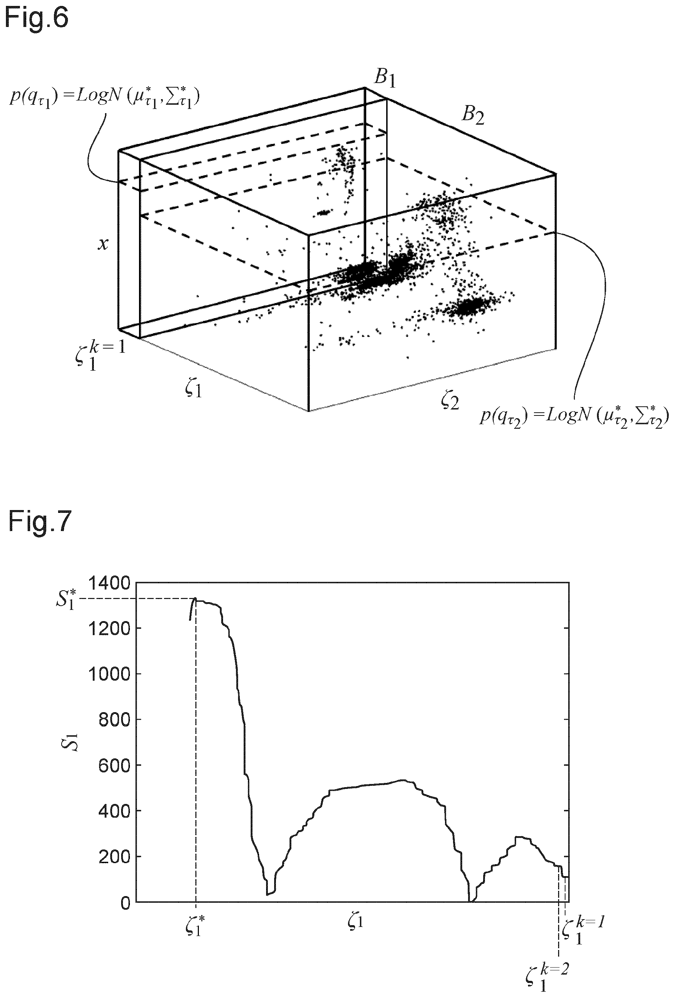

A la première itération, *k*=1, le bloc de données comportant les valeurs x de l'indicateurs de santé *CI* en fonction des deux paramètres de contexte $\zeta_1$, $\zeta_2$ est scindé en deux blocs de données $B_1,B_2$ à la coordonnée $\zeta_1^{k=1}$ en respectant la condition d'un nombre minimum $N_m$ de valeurs x de l'indicateur de santé *CI* conditionné sur le premier paramètre de contexte $\zeta_1$, comme représenté sur la figure 6.

Un modèle de mélange de distributions gamma est estimé pour chaque bloc de données $B_1,B_2$, selon la relation $p(x) = \sum_{n=1}^{K} \pi_n.p(x; \alpha_n, \beta_n)$. Les moyennes $\mu_{\tau 1}$ et $\mu_{\tau 2}$ ainsi que les variances $\Sigma_{\tau 1}$ et $\Sigma_{\tau 2}$ sont estimées à un niveau de probabilité $\tau$. La statistique de Welch $s_j(k)$ est également calculée.

Ensuite, l'itération suivante, k=2, est réalisée, le paramètre de contexte $\zeta_1$ étant incrémenté ($\zeta_1^{k=2}$).

Le processus est ainsi réalisé de nouveau pour le premier paramètre de contexte $\zeta_1$ en scindant successivement les blocs de données pour chaque itération jusqu'à ce qu'au moins une des deux conditions précédemment citées soit vérifiée.

Puis le processus est également réalisé pour le second paramètre de contexte $\zeta_2$.

Une valeur maximale de la statistique de Welch peut être déterminée sur l'ensemble de l'espace des paramètres de contexte, la coordonnée de discrétisation $\zeta_{j*}^{k*}$ étant définie égale à cette valeur maximale $S_1^*$ de la statistique de Welch comme représenté sur la figure 7.

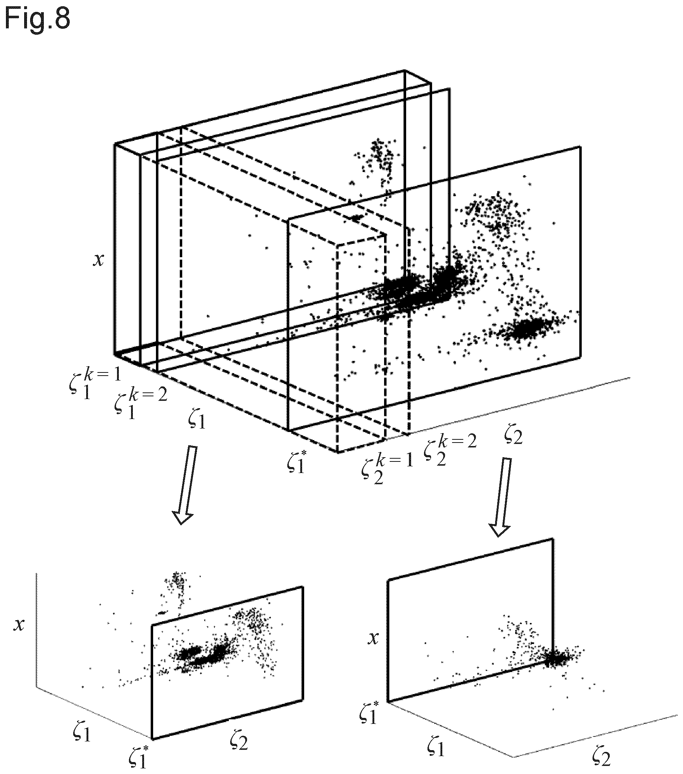

Les valeurs x de l'indicateur de santé *CI* sont alors séparées, selon une discrétisation bidimensionnelle de l'indicateur de santé *CI* pour chacun des deux paramètres de contexte $\zeta_1, \zeta_2$ en deux sous-ensembles désignés par exemple « data sets » à la valeur et au paramètre de contexte déterminé précédemment. La figure 8 représente une telle discrétisation bidimensionnelle en fonction des paramètres de contexte $\zeta_1$ et $\zeta_2$ suivant le processus de construction d'un arbre de décision. Les deux blocs gauche et droite sont séparés à la coordonnée $\zeta_1^*$.

Un nœud de décision 320 de l'arbre de décision 300 est alors créé, voire un nœud racine 310 s'il s'agit du premier nœud de l'arbre 300.

Le processus complet se répète alors pour la création de chaque nœud de décision 320 de l'arbre de décision 300. Pour chaque branche, ce processus prend fin à la création d'un nœud feuille 330, si la valeur de la statistique de Welch est inférieure à la valeur critique de la statistique de Welch $\left( t^{-1}\left( 1 - \frac{\alpha}{2}, \nu \right) \right)$ estimée ou si le nombre minimum de valeurs pour l'indicateur de santé *CI* est atteint dans un des blocs $B_1, B_2$.

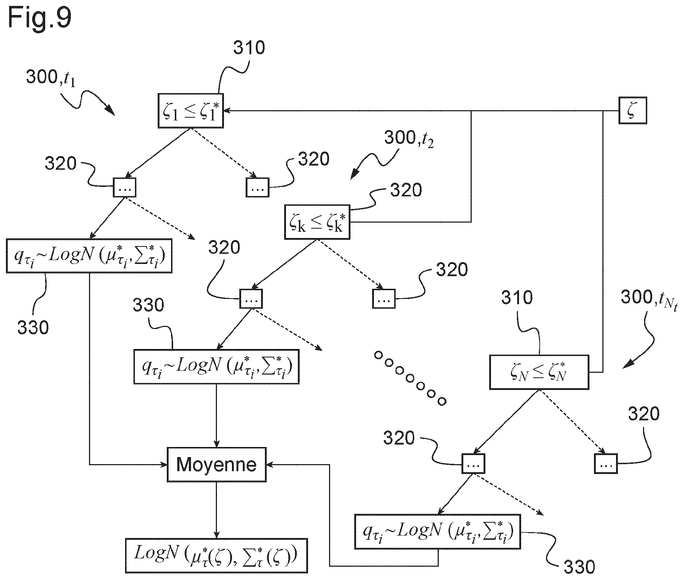

La procédure de construction d'un arbre de décision 300 unique est ainsi complète lorsque chaque branche se termine par un nœud feuille 330. Un exemple utilisant une agrégation de $N_t$ arbres de décision $t_1, \ldots, t_{N_t}$ est représenté sur la figure 9, la procédure de construction d'un tel ensemble de $N_t$ arbres de décision étant similaire.

Plusieurs arbres de décision peuvent ensuite être estimés. Pour chaque arbre de décision, un tirage aléatoire des données formées par un indicateur de santé *CI* et un ensemble de paramètres de contexte $D^{N_t} = \{x, \zeta\}^{N_t}$ est réalisée. $N_t$ correspond au nombre de tirages aléatoires pour réaliser un ensemble d'arbres de décisions $T = \{t_1, t_2 \ldots t_{N_t}\}$.

Les différents arbres de décision ainsi construits peuvent alors être utilisés lors de la phase opérationnelle 200 en moyennant les paramètres des distributions de quantile de chaque arbre de décision parcouru pour une valeur x de l'indicateur de santé *CI* et les valeurs de paramètre de contexte $\zeta$ associés.

A l'aide du ou des arbres de décision 300, la fonction $f(\zeta)$ peut alors être estimée suite à la réalisation d'une corrélation entre les distributions de quantiles en fonction des paramètres de contexte $\zeta$.

Une fois la fonction $f(\zeta)$ estimée, il est alors possible de prédire, pour un ensemble de paramètres de contexte $\zeta$ ou un unique paramètre de contexte $\zeta$, les paramètres des distributions de quantiles associés.

Pour un nouveau jeu de paramètres de contexte $\zeta$ ou un unique paramètre de contexte $\zeta$, chaque arbre de décision *t* comporte un nœud feuille $l(\zeta_l, t)$.

La distribution de quantiles prédite sur l'ensemble des $N_t$ arbres de décision pour un ensemble de paramètres de contexte $\zeta$ s'écrit alors :

$$p(q_\tau(\zeta)) = f(\zeta) = LogN(\mu_\tau^*(\zeta), \Sigma_\tau^*(\zeta)).$$

Une moyenne $\mu_{\tau i}^*$ et une variance $\Sigma_{\tau i}^*$ de la distribution de quantiles peuvent être estimées au nœud feuille *l*($\zeta_l, t$) respectant la condition

$$\mathbb{1}_{\zeta \in \{l(\zeta_I, t_i)\}}.$$

La moyenne $\mu_\tau^*(\zeta)$ peut s'écrire :

$$\mu_\tau^*(\zeta) = \frac{1}{N_t} \sum_{i=1}^{N_t} s_i^\mu(\zeta, t).$$

En particulier, la valeur de la moyenne du quantile associée au nœud feuille *l*($\zeta_l, t$) de l'arbre *t* en fonction du/des paramètres de contexte $\zeta$ est alors

$$s_i^\mu(\zeta, t) = \mathbb{1}_{\zeta \in \{l(\zeta_I, t_i)\}} \mu_{\tau i}^* \quad i = 1, \ldots, N_t.$$

La variance $\Sigma_{\tau i}^*$ contient la moyenne des variances des $N_t$ arbres de décision et la variance de l'estimation de la moyenne sur tous les arbres de décision générés telle que :

$$\Sigma_\tau^*(\zeta) = \frac{1}{N_t}\sum_{i=1}^{N_t} s_i^\Sigma(\zeta,t) + \frac{1}{N_t}\sum_{i=1}^{N_t}\left(s_i^\mu(\zeta,t) - \mu_\tau^*(\zeta)\right)^2.$$

En particulier, la valeur de la variance du quantile associée au nœud feuille $l(\zeta_l,t)$ de l'arbre $t$ en fonction du/des paramètres de contexte $\zeta$ s'écrit :

$$s_i^\Sigma(\zeta,t) = \mathbb{1}_{\zeta\in\{l(\zeta_I,t_i)\}}\Sigma_{\tau_i}^* \quad i = 1,..,N_t.$$

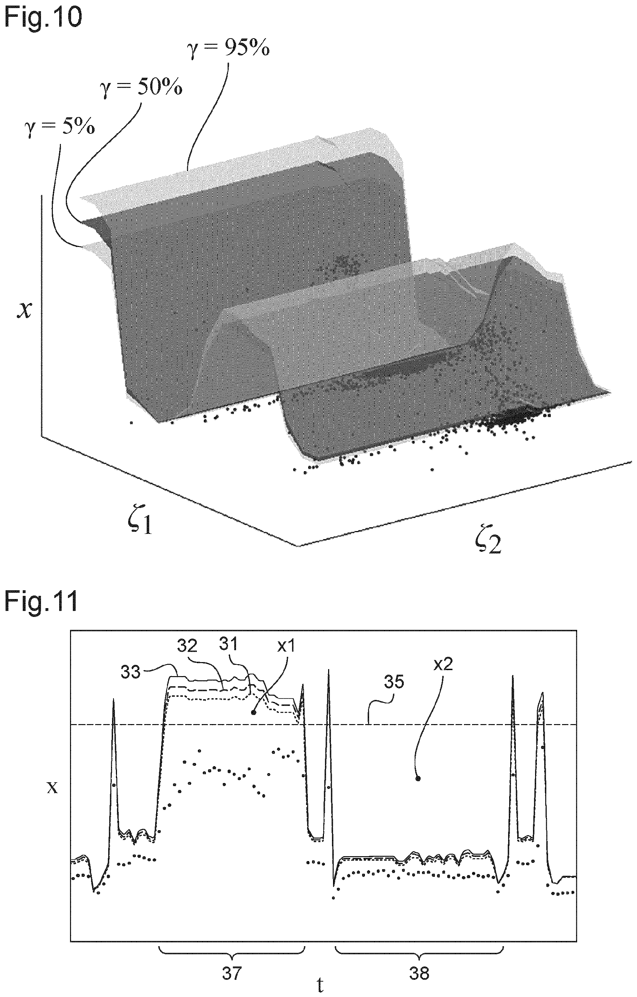

De la sorte, un modèle variant de seuil $H(\tau,\zeta,\gamma)$ tel que représenté sur la figure 10, peut être défini pour une valeur x de l'indicateur de santé $CI$ en fonction de deux paramètres de contexte $\zeta_1,\zeta_2$ avec un niveau de probabilité $\tau$ de fausses alarmes égal à 0.9999 et avec trois différents taux de confiance, désignés également niveaux d'incertitude $\gamma$, égaux respectivement à 0,05 (5%), 0.55 (55%) et 0,95 (95%).

Suite à la réalisation de la phase initiale 100 et l'établissement du modèle de variation de seuil, la phase de surveillance opérationnelle 200 peut être réalisée à chaque utilisation du véhicule 1 impliquant le fonctionnement du système mécanique 10, tant qu'une opération de maintenance significative et susceptible de remettre en cause la fiabilité du modèle de variation de seuil d'un système mécanique 10 du véhicule 1 n'est pas effectuée. La phase de surveillance opérationnelle 200 comporte les étapes suivantes.

Au cours d'une étape de mesure 220, des valeurs opérationnelles vibratoires et des valeurs opérationnelles de contexte successives issues respectivement du ou des capteurs vibratoires 20 et du ou des capteurs de contexte 25 sont mesurées et émises vers la mémoire 6,6' pour y être stockées et/ou éventuellement émises directement vers le calculateur 50.

Cette étape de mesure 220 est similaire à l'étape de mesure 120 des valeurs initiales vibratoires et des valeurs initiales de contexte successives issues respectivement du ou des capteurs vibratoire 20 et du ou des capteurs de contexte 25.

Ensuite, au cours d'une étape de détermination 230, plusieurs valeurs opérationnelles de santé de chaque indicateur de santé $CI$ sont déterminées de façon usuelle en fonction des valeurs opérationnelles vibratoires, à l'aide du calculateur 50. Cette étape de détermination 230 est similaire à l'étape de détermination 130 de plusieurs valeurs initiales de santé de chaque indicateur de santé $CI,$ et chaque valeur opérationnelle de santé d'un indicateur de santé $CI$ est associée à une des valeurs opérationnelles de contexte d'un ou de plusieurs paramètres de contexte.

Comme pour l'étape de détermination 130, l'étape de détermination 230 de plusieurs valeurs opérationnelles de santé de chaque indicateur de santé $CI$ peut être réalisée par l'unité de calcul 51 embarquée dans le véhicule 1, pendant l'utilisation du véhicule 1 par exemple, ou par l'unité de calcul 55 de la station 40 après l'arrêt du véhicule 1. Chaque valeur opérationnelle d'un indicateur de santé $CI$ peut alors être stockée soit dans la mémoire 6,6' présente dans le véhicule 1, soit dans la mémoire 56 de la station 40.

Puis au cours d'une étape de détermination 250, un seuil propre à la valeur opérationnelle de santé de chaque indicateur de santé $CI$ est déterminé à l'aide du modèle de variation de seuil et de la ou des valeurs opérationnelles de contexte associés.

La figure 11 représente des valeurs x d'un indicateur de santé $CI$ en fonction du temps t, ainsi que des courbes 31,32,33 de variation du seuil relatif à cet indicateur de santé $CI$ avec respectivement un niveau d'incertitude $\gamma$ égal à 0,05, 0,55 et 0,95 et avec un niveau de probabilité $\tau$ de fausses alarmes égal à 0.9999. Pour comparaison, un seuil algébriquement constant 35 estimé par exemple à partir d'une distribution cumulative inverse d'une distribution Gaussienne avec un niveau de probabilité $\tau$=0.9999 est également représenté.

On constate ainsi que les courbes 31,32,33 de variation du seuil peuvent être supérieures ou inférieures au seuil algébriquement constant 35, selon les intervalles de temps. Par exemple, sur un premier intervalle 37 de temps, le seuil algébriquement constant 35 est inférieur aux courbes 31,32,33 de variation du seuil et donc plus pénalisant dans le sens de potentiellement déclencher des fausses alarmes.

Enfin, au cours d'une étape de déclenchement 260, une alerte est déclenchée pour indiquer à un opérateur ou à un pilote du véhicule 1 d'un risque de présence d'un défaut sur le système mécanique 10 si la valeur opérationnelle de santé de chaque indicateur de santé $CI$ est supérieure au seuil déterminé.

De la sorte, la détection d'un défaut sur le système mécanique 10 peut être anticipée de façon fiable, efficace et robuste dès les premiers signes de son apparition, la présence de ce défaut pouvant en effet être détectée au travers des vibrations de ce système mécanique 10.

Par exemple, l'utilisation d'une des courbes 31,32,33 de variation du seuil représentées sur la figure 11 évite ainsi avantageusement la génération d'une fausse alarme pour une valeur $x_1$ de l'indicateur de santé $CI$. L'utilisation d'une des courbes 31,32,33 de variation du seuil évite également la non-détection d'un potentiel défaut pour une valeur $x_2$ de l'indicateur de santé $CI$.

Naturellement, la présente invention est sujette à de nombreuses variations quant à sa mise en œuvre. Bien que plusieurs modes de réalisation aient été décrits, on comprend bien qu'il n'est pas concevable d'identifier de manière exhaustive tous les modes possibles.

**Revendications**

1. Procédé de surveillance de santé d'un système mécanique (10) équipant un véhicule (1), ledit système mécanique (10) comportant au moins un organe (15) en mouvement ainsi qu'au moins un capteur vibratoire (20) émettant un signal vibratoire, ledit système mécanique (10) ou ledit véhicule (1) comportant au moins un capteur de contexte (25) émettant un signal de contexte relatif à au moins un paramètre de contexte, ledit au moins un paramètre de contexte étant choisi dans une liste comportant au moins un ou plusieurs paramètres fonctionnels dudit système mécanique (10), un ou plusieurs paramètres de navigation dudit véhicule (1) et un ou plusieurs paramètres atmosphériques, ledit procédé étant composé d'une phase initiale de définition d'un modèle de variation de seuil en fonction dudit au moins un paramètre de contexte suivie d'une phase de surveillance opérationnelle du système mécanique, ladite phase initiale (100) comportant les étapes suivantes :

   - mesures (120) de valeurs initiales vibratoires successives issues dudit au moins un capteur vibratoire (20) et de valeurs initiales de contexte successives issues dudit au moins un capteur de contexte (25),
   - détermination (130), à l'aide d'un calculateur (5,55), de plusieurs valeurs initiales de santé d'au moins un indicateur de santé $CI$ relatif audit système mécanique (10) en fonction desdites valeurs initiales vibratoires, chaque valeur initiale de santé étant associée à une desdites valeurs initiales de contexte dudit au moins un paramètre de contexte,
   - définition (150) pour chaque indicateur de santé $CI$, d'un modèle de variation de seuil, ledit modèle de variation de seuil étant défini en fonction desdites valeurs initiales de santé dudit indicateur de santé $CI$ et lesdites valeurs initiales de contexte dudit au moins un paramètre de contexte, en partitionnant un domaine formé par lesdites valeurs initiales de contexte dudit au moins un paramètre de contexte en plusieurs plages de valeurs pour lesquelles ledit seuil relatif audit indicateur de santé $CI$ est statistiquement constant sur chaque plage de valeurs, chaque plage étant associée à plusieurs desdites valeurs initiales de contexte, et en déterminant des valeurs dudit seuil avec une méthode utilisant des régressions sur des paramètres de distributions de quantile conditionnées sur des paramètres de contexte et des décompositions de domaine dudit au moins un paramètre de contexte à l'aide d'au moins un arbre de décision,

   ladite phase de surveillance opérationnelle (200) comportant des étapes suivantes lors du fonctionnement du système mécanique (10) :

   - mesures (220) de valeurs opérationnelles vibratoires successives issues dudit au moins un capteur vibratoire (20), et de valeurs opérationnelles de contexte successives issues dudit au moins un capteur de contexte (25),
   - détermination (230), avec dudit calculateur (5,55) d'une valeur opérationnelle de santé d'au moins un indicateur de santé $CI$ en fonction desdites valeurs opérationnelles vibratoires, ladite valeur opérationnelle de santé d'au moins un indicateur de santé $CI$ étant associée à une desdites valeurs opérationnelles de contexte relatives à un ou plusieurs paramètres de contexte,
   - détermination (250) dudit seuil propre à ladite valeur opérationnelle de santé dudit au moins un indicateur de santé $CI$ à l'aide dudit modèle de variation de seuil et de ladite au moins une valeur opérationnelle de contexte associée,
   - déclenchement (260) d'une alerte signalant un risque de présence d'un défaut sur ledit système mécanique (10) si ladite valeur opérationnelle de santé dudit au moins un indicateur de santé $CI$ est supérieur audit seuil déterminé.

2. Procédé selon la revendication 1,
   pour lequel ladite définition (150) dudit modèle de variation de seuil est réalisée par agrégation d'au moins deux arbres de décision.

3. Procédé selon l'une quelconque des revendications 1 à 2,
   pour lequel ladite définition (150) dudit modèle de variation de seuil est réalisée avec un taux minimum de fausses alarmes prédéterminé et un taux de confiance prédéterminé dans ledit taux minimum de fausses alarmes.

4. Procédé selon l'une quelconque des revendications 1 à 3,

pour lequel lesdites valeurs initiales de santé dudit au moins un indicateur de santé *CI* sont calculées à partir d'une décomposition en coefficients de Fourier desdites valeurs initiales vibratoires successives modélisées avec une hypothèse de cyclostationnarité d'ordre un et deux dudit signal vibratoire, qui suit une loi du Khi-deux, généralisé par une distribution GAMMA.

**5.** Procédé selon l'une quelconque des revendications 1 à 4,
pour lequel ladite phase initiale (100) comporte une étape d'analyse (140) pour analyser une sensibilité dudit au moins un indicateur de santé *CI* auxdits paramètres de contexte et pour sélectionner des paramètres de contexte influents.

**6.** Procédé selon l'une quelconque des revendications 1 à 4,
pour lequel ladite phase initiale (100) comporte une étape de présélection (110) pour sélectionner des paramètres de contexte pris en compte par ledit procédé parmi une multitude de paramètres de contexte mesurés par ledit au moins un capteur de contexte (25).

**7.** Procédé selon l'une quelconque des revendications 1 à 6,
pour lequel ledit seuil relatif audit au moins un indicateur de santé *CI* est considéré comme étant statistiquement constant sur une plage de valeurs contiguës d'un paramètre de contexte si, pour toute division de ladite plage de valeurs en deux sous-plages de valeurs contiguës, lesdits seuils estimés respectivement sur lesdites deux sous-plages de valeurs sont considérés identiques selon un test statistique.

**8.** Programme d'ordinateur comprenant des instructions qui, lorsque ledit programme est exécuté, conduisent à mettre en œuvre le procédé selon l'une quelconque des revendications 1 à 7.

**9.** Dispositif de surveillance (9) configuré pour surveiller un système mécanique (10) équipant un véhicule (1), ledit système mécanique (10) comportant au moins un organe (15) en mouvement, ledit dispositif de surveillance (9) comportant au moins un capteur vibratoire (20) émettant un signal vibratoire, au moins un capteur de contexte (25) émettant au moins un signal de contexte relatif à au moins un paramètre de contexte et ledit calculateur (50), **caractérisé en ce que** ledit dispositif de surveillance (9) est configuré pour la mise en œuvre du procédé selon l'une quelconque des revendications 1 à 7.

**10.** Dispositif de surveillance (9) selon la revendication 9,
pour lequel ledit calculateur (50) comporte une unité de calcul (51) et une mémoire (6,6') embarquées dans ledit véhicule (1).

**11.** Dispositif de surveillance (9) selon l'une quelconque des revendications 9 à 10,
pour lequel ledit calculateur (50) comporte une unité de calcul (56) et une mémoire (56) désolidarisées dudit véhicule (1).

**12.** Système mécanique (10) comportant au moins un organe (15) en mouvement,
**caractérisé en ce que** ledit système mécanique (10) comporte un dispositif de surveillance (9) selon l'une quelconque des revendications 9 à 11.

**13.** Aéronef (1) comportant un système mécanique (10) et un dispositif de surveillance (9) selon l'une quelconque des revendications 9 à 11.

**Patentansprüche**

**1.** Verfahren zur Statusüberwachung eines mechanischen Systems (10) in einem Transportmittel (1), wobei das mechanische System (10) mindestens ein bewegliches Element (15) sowie mindestens einen Schwingungssensor (20) umfasst, der ein Schwingungssignal aussendet, wobei das mechanische System (10) oder das Transportmittel (1) mindestens einen Kontextsensor (25) aufweist, der ein Kontextsignal in Bezug auf mindestens einen Kontextparameter aussendet, wobei der mindestens eine Kontextparameter aus einer Liste ausgewählt wird, die mindestens einen oder mehrere Funktionsparameter des mechanischen Systems (10), einen oder mehrere Navigationsparameter des Transportmittels (1) und einen oder mehrere atmosphärische Parameter enthält, wobei das Verfahren aus einer Anfangsphase des Definierens eines Schwellenwertänderungsmodells in Abhängigkeit von dem mindestens einen Kontextparameter, gefolgt von einer Phase des operativen Überwachens des mechanischen Systems, besteht,

wobei die Anfangsphase (100) die folgenden Schritte umfasst:

- Messen (120) von von dem mindestens einen Schwingungssensor (20) stammenden aufeinanderfolgenden Schwingungsanfangswerten und von von dem mindestens einen Kontextsensor (25) stammenden aufeinanderfolgenden Kontextanfangswerten,
- Bestimmen (130) mehrerer Statusanfangswerte mindestens eines Statusindikators CI für das mechanische System (10) mit Hilfe eines Rechners (5, 55) in Abhängigkeit von den Schwingungsanfangswerten, wobei jeder Statusanfangswert einem der Kontextanfangswerte des mindestens einen Kontextparameters zugeordnet ist,
- Definieren (150) eines Schwellenwertänderungsmodells für jeden Statusindikator CI, wobei das Schwellenwertänderungsmodell in Abhängigkeit von den Statusanfangswerten des Statusindikators CI und den Anfangskontextwerten des mindestens einen Kontextparameters definiert wird, durch Aufteilen eines durch die Kontextanfangswerte des mindestens einen Kontextparameters gebildeten Bereichs in mehrere Wertebereiche, wobei der auf den Statusindikator CI bezogene Schwellenwert in jedem Wertebereich statistisch konstant ist, wobei jeder Wertebereich mehreren der Kontextanfangswerte zugeordnet ist, und durch Bestimmen von Werten des Schwellenwerts mit einem Verfahren, das Regressionen auf von Kontextparametern abhängige Quantilverteilungsparameter und Bereichsaufteilungen des mindestens einen Kontextparameters unter Verwendung mindestens eines Entscheidungsbaums verwendet,

wobei die operative Überwachungsphase (200) während des Betriebs des mechanischen Systems (10) die folgenden Schritte umfasst:

- Messen (220) von von dem mindestens einen Schwingungssensor (20) stammenden aufeinanderfolgenden operativen Schwingungswerten und von von dem mindestens einen Kontextsensor (25) stammenden aufeinanderfolgenden operativen Kontextwerten,
- Bestimmen (230) eines operativen Statuswerts mindestens eines Statusindikators CI anhand der operativen Schwingungswerte mit dem Rechner (5, 55), wobei der operative Statuswert mindestens eines Statusindikators CI einem der auf einen oder mehrere Kontextparameter bezogenen operativen Kontextwerte zugeordnet ist,
- Bestimmen (250) des für den operativen Statuswert des mindestens einen Statusindikators CI spezifischen Schwellenwerts mit Hilfe des Schwellenwertänderungsmodells und des mindestens einen zugeordneten operativen Kontextwerts,
- Auslösen (260) einer Warnmeldung, die auf das Risiko eines Fehlers im mechanischen System (10) hinweist, wenn der operative Statuswert des mindestens einen Statusindikators CI den ermittelten Schwellenwert überschreitet.

2. Verfahren nach Anspruch 1,
bei dem das Definieren (150) des Schwellenwertänderungsmodells durch Aggregieren von mindestens zwei Entscheidungsbäumen erfolgt.

3. Verfahren nach einem der Ansprüche 1 bis 2,
bei dem das Definieren (150) des Schwellenwertänderungsmodells mit einer vorgegebenen Mindestfehlerquote und einer vorgegebenen Quote der Konfidenzquote in die Mindestfehlerquote erfolgt.

4. Verfahren nach einem der Ansprüche 1 bis 3,
bei dem die Statusanfangswerte des mindestens einen Statusindikators CI aus einer Fourier-Zerlegung der unter der Annahme einer Zyklostationarität erster und zweiter Ordnung des Schwingungssignals modellierten aufeinanderfolgenden Schwingungsanfangswerte berechnet werden, das einer durch eine GAMMA-Verteilung verallgemeinerten Chi-Quadrat-Verteilung folgt.

5. Verfahren nach einem der Ansprüche 1 bis 4,
bei dem die Anfangsphase (100) einen Analyseschritt (140) umfasst, um eine Empfindlichkeit des mindestens einen Statusindikators CI gegenüber den Kontextparametern zu analysieren und einflussreiche Kontextparameter auszuwählen.

6. Verfahren nach einem der Ansprüche 1 bis 4,
bei dem die Anfangsphase (100) einen Vorauswahlschritt (110) zum Auswählen von von dem Verfahren berücksichtigten Kontextparametern aus einer Mehrzahl von von dem mindestens einen Kontextsensor (25) gemessenen Kontextparametern umfasst.

7. Verfahren nach einem der Ansprüche 1 bis 6,
bei dem der Schwellenwert für den mindestens einen Statusindikator CI über einen zusammenhängenden Wertebereich eines Kontextparameters als statistisch konstant angesehen wird, wenn bei jeder Unterteilung des Wertebereichs in zwei zusammenhängende Teilwertebereiche die jeweils für die beiden Teilwertebereiche geschätzten Schwellenwerte anhand eines statistischen Tests als identisch angesehen werden.

8. Computerprogramm mit Anweisungen, die bei Ausführung des Programms dazu führen, dass das Verfahren nach einem der Ansprüche 1 bis 7 durchgeführt wird.

9. Überwachungsvorrichtung (9), die zur Überwachung eines mechanischen Systems (10) in einem Transportmittel (1) konfiguriert ist, wobei das mechanische System (10) mindestens ein bewegliches Element (15) umfasst, wobei die Überwachungsvorrichtung (9) mindestens einen Schwingungssensor (20), der ein Schwingungssignal aussendet, mindestens einen Kontextsensor (25), der mindestens ein Kontextsignal in Bezug auf mindestens einen Kontextparameter aussendet, und den Rechner (50) umfasst,
**dadurch gekennzeichnet, dass** die Überwachungsvorrichtung (9) zur Durchführung des Verfahrens nach einem der Ansprüche 1 bis 7 konfiguriert ist.

10. Überwachungsvorrichtung (9) nach Anspruch 9,
bei der der Rechner (50) eine in dem Transportmittel (1) eingebaute Recheneinheit (51) und einen Speicher (6, 6') umfasst.

11. Überwachungsvorrichtung (9) nach einem der Ansprüche 9 bis 10,
bei der der Rechner (50) eine von dem Transportmittel (1) getrennte Recheneinheit (56) und einen Speicher (56) umfasst.

12. Mechanisches System (10) mit mindestens einem beweglichen Element (15),
**dadurch gekennzeichnet, dass** das mechanische System (10) eine Überwachungsvorrichtung (9) gemäß einem der Ansprüche 9 bis 11 umfasst.

13. Luftfahrzeug (1) mit einem mechanischen System (10) und einer Überwachungsvorrichtung (9) gemäß einem der Ansprüche 9 bis 11.

**Claims**

1. A method for monitoring the health of a mechanical system (10) equipping a vehicle (1), said mechanical system (10) comprising at least one moving member (15) as well as at least one vibration sensor (20) emitting a vibration signal, said mechanical system (10) or said vehicle (1) comprising at least one context sensor (25) emitting a context signal relating to at least one context parameter, said at least one context parameter being chosen from a list comprising at least one or more functional parameters of said mechanical system (10), one or more navigation parameters of said vehicle (1) and one or more atmospheric parameters, said method being composed of an initial phase of defining a threshold variation model as a function of said at least one context parameter followed by a phase of operational monitoring of the mechanical system,
said initial phase (100) comprising the following steps:

- taking measurements (120) of successive initial vibration values from said at least one vibration sensor (20) and successive initial context values from said at least one context sensor (25),
- determining (130), with a calculator (5, 55), several initial health values of at least one health indicator $CI$ relating to said mechanical system (10) as a function of said initial vibration values, each initial health value being associated with one of said initial context values of said at least one context parameter,
- defining (150), for each health indicator $CI$, a threshold variation model, said threshold variation model being defined as a function of said initial health values of said health indicator $CI$ and said initial context values of said at least one context parameter, by partitioning a domain formed by said initial context values of said at least one context parameter into several ranges of values for which said threshold relating to said health indicator $CI$ is statistically constant over each range of values, each range being associated with several of said initial context values, and by determining values of said threshold with a method using regressions on parameters of quantile distributions conditioned on context parameters and domain decompositions of said at least one context parameter using at least one decision tree,

said operational monitoring phase (200) comprising the following steps during the operation of the mechanical system (10):

- taking measurements (220) of successive operational vibration values from said at least one vibration sensor (20) and successive operational context values from said at least one context sensor (25),
- determining (230), with said calculator (5, 55), an operational health value of at least one health indicator $CI$ as a function of said operational vibration values, said operational health value of at least one health indicator $CI$ being associated with one of said operational context values relating to one or more context parameters,
- determining (250) said threshold specific to said operational health value of said at least one health indicator $CI$ using said threshold variation model and said at least one associated operational context value,
- triggering (260) an alert signalling a risk of presence of a fault in said mechanical system (10) if said operational health value of said at least one health indicator $CI$ is greater than said determined threshold.

2. The method according to claim 1,
for which said definition (150) of said threshold variation model is realised by aggregating at least two decision trees.

3. The method according to any one of claims 1 to 2,
for which said definition (150) of said threshold variation model is realised with a predetermined minimum rate of false alarms and a predetermined level of confidence in said minimum rate of false alarms.

4. The method according to any one of claims 1 to 3,
for which said initial health values of said at least one health indicator $CI$ are calculated from a decomposition, into Fourier coefficients, of said successive initial vibration values modelled with an assumption of first-and second-order cyclostationarity of said vibration signal, which follows a chi-squared distribution, generalised by a gamma distribution.

5. The method according to any one of claims 1 to 4,
for which said initial phase (100) comprises an analysis step (140) for analysing a sensitivity of said at least one health indicator $CI$ to said context parameters and for selecting influential context parameters.

6. The method according to any one of claims 1 to 4,
for which said initial phase (100) comprises a preselection step (110) for selecting context parameters taken into account by said method from a plurality of context parameters measured by said at least one context sensor (25).

7. The method according to any one of claims 1 to 6,
for which said threshold relating to said at least one health indicator $CI$ is considered as being statistically constant over a range of contiguous values of a context parameter if, for any division of said range of values into two sub-ranges of contiguous values, said thresholds estimated respectively over said two sub-ranges of values are considered identical according to a statistical test.

8. A computer program comprising instructions which, when said program is run, cause the method according to any one of claims 1 to 7 to be implemented.

9. A monitoring device (9) configured to monitor a mechanical system (10) equipping a vehicle (1), said mechanical system (10) comprising at least one moving member (15), said monitoring device (9) comprising at least one vibration sensor (20) emitting a vibration signal, at least one context sensor (25) emitting at least one context signal relating to at least one context parameter and said calculator (50),
**characterised in that** said monitoring device (9) is configured for implementing the method according to any one of claims 1 to 7.

10. The monitoring device (9) according to claim 9,
for which said calculator (50) comprises a computing unit (51) and a memory (6, 6') on board said vehicle (1).

11. The monitoring device (9) according to any one of claims 9 to 10,
for which said calculator (50) comprises a computing unit (56) and a memory (56) separate from said vehicle (1).

**12.** A mechanical system (10) comprising at least one moving member (15),
**characterised in that** said mechanical system (10) comprises a monitoring device (9) according to any one of claims 9 to 11.

**13.** An aircraft (1) comprising a mechanical system (10) and a monitoring device (9) according to any one of claims 9 to 11.

## Fig.1

## Fig.2

$$N_\gamma \quad N_m \quad \alpha \quad \tau \qquad T \le t_a$$

$$100$$

$$x$$
$$\zeta$$

**Apprentissage**
$$p(q_\tau(\zeta)) = f(\zeta) = LogN(\mu_\tau^*(\zeta), \textstyle\sum_\tau^*(\zeta))$$

**Modèle**

$$200$$

$$\gamma$$
$$\zeta$$

$$T > t_a$$

**Prédiction**
$$H(\tau, \zeta, \gamma) = F^{-1}(\gamma, \mu_\tau^*(\zeta), \textstyle\sum_\tau^*(\zeta))$$

**Détection d'anomalie**
$$x \qquad \mathbb{1}_{x > H(\tau, \zeta, \gamma)}(x)$$

$$0$$

$$1$$

## Fig.3

## Fig.4

## Fig.5

a

b

## Fig.6

## Fig.7

Fig.8

# Fig.9

$$\zeta_1 \leq \zeta_1^*$$

$$\zeta_k \leq \zeta_k^*$$

$$\zeta_N \leq \zeta_N^*$$

$$q_{\tau_i} \sim LogN\left(\mu_{\tau_i}^*, \sum_{\tau_i}^*\right)$$

Moyenne

$$LogN\left(\mu_\tau^*(\zeta), \sum_\tau^*(\zeta)\right)$$

Fig.10

Fig.11

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 7684936 B
- US 20170023438 A
- US 8442778 B
- US 8131420 B
- CN 102963533
- US 20110166799 A
- EP 2345894 A
- EP 4091945 A
- WO 2011023596 A
- CN 107218997
- US 20220163428 A